# EUROPEAN PATENT APPLICATION

(11) **EP 1 679 680 A1**
(43) Date of publication of application: **12.07.2006**
(21) Application number: 05290036.2
(22) Date of filing: 06.01.2005
(51) Int. Cl.: G09G 3/20

(54) **Method and apparatus for large area flicker reduction of video pictures**

(71) Applicant: DEUTSCHE THOMSON-BRANDT GMBH, 78048 Villingen-Schwenningen (DE)
(72) Inventor: Correa, Carlos c/o Thomson, 92648 BOULOGNE CEDEX (FR); Zwing, Rainer c/o Thomson, 92648 BOULOGNE CEDEX (FR); Thebault, Cédric c/o Thomson, 92648 BOULOGNE CEDEX (FR)
(74) Representative: Le Dantec, Claude

(57) **Abstract**

The invention relates to a method and apparatus for processing video pictures, in particular for large area flicker effect reduction. This method concerns a new coding called Parallel Peak Coding. The general idea of the Parallel Peak Code is to have almost always the same energy in two packets of light and to encode the code words for these two packets differently so that changes in sub-field code word will not appear in the two packet code words simultaneously. This aims at reducing the false contour effect.

## Description

The invention relates to a method and apparatus for processing video pictures, in particular for large area flicker effect reduction.
More specifically the invention is closely related to a kind of video processing for improving the picture quality of pictures which are displayed on matrix displays like plasma display panels (PDP), display devices with digital micro mirror arrays (DMD) and all kind of displays based on the principle of duty cycle modulation (pulse width modulation) of light emission.

### Background

Although plasma display panels are known for many years, plasma displays are encountering a growing interest from TV manufacturers. Indeed, this technology now makes it possible to achieve flat colour panels of large size and with limited depths without any viewing angle constraints. The size of the displays may be much larger than the classical CRT picture tubes would have ever been allowed.

Referring to the latest generation of European TV sets, a lot of work has been made to improve its picture quality. Consequently, there is a strong demand, that a TV set built in a new technology like the plasma display technology has to provide a picture so good or better than the old standard TV technology.

A plasma display panel utilises a matrix array of discharge cells, which could only be switched ON or OFF. Also unlike a CRT or LCD in which grey levels are expressed by analogue control of the light emission, in a PDP the grey level is controlled by modulating the number of light pulses per frame. The eye will integrate this time-modulation over a period corresponding to the eye time response.

For static pictures, this time-modulation, repeats itself, with a base frequency equal to the frame frequency of the displayed video norm. As known from the CRT-technology, a light emission with base frequency of 50 Hz, introduces large area flicker, which can be eliminated by field repetition in 100Hz CRT TV receivers.

Contrary to the CRTs, where the duty cycle of light emission is very short, the duty cycle of light emission in PDPs is ~50% for middle grey. This reduces the amplitude of the 50Hz frequency component in the spectrum, and thus large area flicker artefact, but due to the larger size of PDPs, with a larger viewing angle, even a reduced large area flicker becomes objectionable in terms of picture quality. The present trend of increasing size and brightness of PDPs, will also contribute to aggravate this problem in the future.

A solution is known from the patent application EP 0 982 708 is to use a dual-peak code using two groups of identical subfields. But the above solution still suffer from much more false contour than a single peak code for the same number of sub-fields.

### Invention

It is an object of the present invention to disclose a method and an apparatus, which reduce the large area flicker artefact in PDPs in particular for 50Hz video norms, without introducing false contour effects.

This object is achieved by a method for processing video pictures consisting of pixels, the pixels being digitally coded, the digital code word determining the length of the time period during which the corresponding pixel of a display is activated, wherein to each bit of a digital code word a certain activation duration is assigned, hereinafter called sub-field, the sum of the duration of the sub-fields according to a given code word determining the length of the time period during which the corresponding pixel is activated, the sub-fields of a pixel being organised in two consecutive groups such that to a value of a pixel a code word is assigned which distributes the active sub-field periods equally over the two sub-field groups,
characterized in that the two groups comprise sub-fields of different activation durations and in that, for all pixel values apart from exceptions in the low pixel value range up to a first predetermined limit and/or in the high pixel value range from a second limit on, the pixel value is split into first and second equal values, said first and second values being encoded into first and second code words, said first code word being the part of the code word assigned to one of the two sub-field groups and said second code word being the part of the code word assigned to the other sub-field group.

A dithering step can be possibly applied to said first and second values before being encoded into first and second code words.

Furthermore, for a video pictures sequence with an increased frequency, for example 100 Hz, the pixel values of the even pictures of the sequence will be encoded with the sub-fields of one of the sub-field groups and the pixel values of the odd pictures of the sequence with the sub-fields of the other sub-field group.

The invention concerns also an apparatus for processing video pictures consisting of pixels, the pixels being digitally coded, the digital code word determining the length of the time period during which the corresponding pixel of a display is activated, wherein to each bit of a digital code word a certain activation duration is assigned, hereinafter called sub-field, the sum of the duration of the sub-fields according to a given code word determining the length of the time period during which the corresponding pixel is activated, the sub-fields of a pixel being organised in two consecutive groups such that to a value of a pixel a code word is assigned which distributes the active sub-field periods equally over the two sub-field groups,
characterized in that sub-fields of different activation durations are used in the sub-field groups and in that encoding means are provided for splitting, for all pixel values apart from exceptions in the low pixel value range up to a first predetermined limit and/or the in the high pixel value range from a second limit on, each of said pixel values into first and second equal values and encoding said first and second values into first and second code words, said first code word being the part of the code word assigned to one of the two sub-field groups and said second code word being the part of the code word assigned to the other sub-field group.

The apparatus can further comprise dithering means for processing said first and second values. For a video pictures sequence with an increased frequency, the encoding means encode the pixel values of the even pictures of the sequence with the sub-fields of one of the two sub-field groups and the pixel values of the odd pictures of the sequence with the sub-fields of the other sub-field group.

### DESCRIPTION OF PREFERRED EMBODIMENTS

The general idea of the Parallel Peak Code is to have almost always the same energy in two packets of light and to encode the code words for these two packets differently so that changes in sub-field code word will not appear in the two packet code words simultaneously. This aims at reducing the false contour effect.

The invention can be used with any number of sub-fields. It will be illustrated by a Parallel Peak Coding with 15 sub-fields. Considering a frame comprising 15 sub-fields with the following weights :
1-2-3-5-7-9-11-14-17-20-24-28-33-38-43

In a first step, these sub-fields are organized in two consecutive groups. A part of a sub-field code word is assigned to each group. These two groups of sub-fields are used for generating the two packets of light.

For example, the odd sub-fields are grouped in a first group, called G1, and the even sub-fields are grouped in a second group called G2.
G1 : 1 -3-7-11 -17-24-33-43
G2 : 2-5-9-14-20-28-38

Of course, the distribution of the sub-fields between the two groups can be carried out differently. The only condition is that the two groups should comprise sub-fields of different weights. Furthermore, the sub-fields of the group G1 could be put before or after the sub-fields of the group G2.

In a second step, a different coding is selected for each group of sub-fields. The level of false contour and the dithering noise obtained with the Parallel Peak Code are then depending directly on the level of false contour and dithering noise for each of the two packets of light. For example, the following encoding tables can be used :
- for the group G1 (1 - 3 - 7 - 11 - 17 - 24 - 33 - 43)

| | | | | | |
|---|---|---|---|---|---|
| level | 0: | 00000000 | level | 72: | 11111010 |
| level | 1: | 10000000 | level | 75: | 00110110 |
| level | 3: | 01000000 | level | 76: | 10110110 |
| level | 4: | 11000000 | level | 78: | 01110110 |
| level | 7: | 00100000 | level | 79: | 11110110 |
| level | 8: | 10100000 | level | 81: | 00101110 |
| level | 10: | 01100000 | level | 82: | 10101110 |
| level | 11: | 11100000 | level | 84: | 01101110 |
| level | 14: | 01010000 | level | 85: | 11101110 |
| level | 15: | 11010000 | level | 86: | 10011110 |
| level | 18: | 00110000 | level | 88: | 01011110 |
| level | 19: | 10110000 | level | 89: | 11011110 |
| level | 21: | 01110000 | level | 92: | 00111110 |
| level | 22: | 11110000 | level | 93: | 10111110 |
| level | 24: | 00101000 | level | 95: | 01111110 |
| level | 25: | 10101000 | level | 96: | 11111110 |
| level | 27: | 01101000 | level | 98: | 01011101 |
| level | 28: | 11101000 | level | 99: | 11011101 |
| level | 29: | 10011000 | level | 102: | 00111101 |
| level | 31: | 01011000 | level | 103: | 10111101 |
| level | 32: | 11011000 | level | 105: | 01111101 |
| level | 35: | 00111000 | level | 106: | 11111101 |
| level | 36: | 10111000 | level | 107: | 01011011 |
| level | 38: | 01111000 | level | 108: | 11011011 |
| level | 39: | 11111000 | level | 111: | 00111011 |
| level | 42: | 00110100 | level | 112: | 10111011 |
| level | 43: | 10110100 | level | 114: | 01111011 |
| level | 45: | 01110100 | level | 115: | 11111011 |
| level | 46: | 11110100 | level | 118: | 00110111 |
| level | 48: | 00101100 | level | 119: | 10110111 |
| level | 49: | 10101100 | level | 121: | 01110111 |
| level | 51: | 01101100 | level | 122: | 11110111 |
| level | 52: | 11101100 | level | 124: | 00101111 |
| level | 53: | 10011100 | level | 125: | 10101111 |
| level | 55: | 01011100 | level | 127: | 01101111 |
| level | 56: | 11011100 | level | 128: | 11101111 |
| level | 59: | 00111100 | level | 129: | 10011111 |
| level | 60: | 10111100 | level | 131: | 01011111 |
| level | 62: | 01111100 | level | 132: | 11011111 |
| level | 63: | 11111100 | level | 135: | 00111111 |
| level | 65: | 11011010 | level | 136: | 10111111 |
| level | 68: | 00111010 | level | 138: | 01111111 |
| level | 69: | 10111010 | level | 139: | 11111111 |
| level | 71: | 01111010 | | | |

- for the group G2 (2-5-9-14-20-28-38)

| | | | | | |
|---|---|---|---|---|---|
| level | 0: | 0000000 | level | 62: | 0110110 |
| level | 2: | 1000000 | level | 64: | 1110110 |
| level | 5: | 0100000 | level | 67: | 0101110 |
| level | 7: | 1100000 | level | 69: | 1101110 |
| level | 9: | 0010000 | level | 71: | 0011110 |
| level | 11: | 1010000 | level | 73: | 1011110 |
| level | 14: | 0110000 | level | 76: | 0111110 |
| level | 16: | 1110000 | level | 78: | 1111110 |
| level | 19: | 0101000 | level | 81: | 0011101 |
| level | 21: | 1101000 | level | 83: | 1011101 |
| level | 23: | 0011000 | level | 86: | 0111101 |
| level | 25: | 1011000 | level | 88: | 1111101 |
| level | 28: | 0111000 | level | 89: | 0011011 |
| level | 30: | 1111000 | level | 91: | 1011011 |
| level | 34: | 0110100 | level | 94: | 0111011 |
| level | 36: | 1110100 | level | 96: | 1111011 |
| level | 39: | 0101100 | level | 97: | 1010111 |
| level | 41: | 1101100 | level | 100: | 0110111 |
| level | 43: | 0011100 | level | 102: | 1110111 |
| level | 45: | 1011100 | level | 105: | 0101111 |
| level | 48: | 0111100 | level | 107: | 1101111 |
| level | 50: | 1111100 | level | 109: | 0011111 |
| level | 53: | 1011010 | level | 111: | 1011111 |
| level | 56: | 0111010 | level | 114: | 0111111 |
| level | 58: | 1111010 | level | 116: | 1111111 |
| level | 59: | 1010110 | | | |

All the video levels can not be achieved. So, the missing video levels are expressed from the available levels by a classical dithering step. Two independent dithering blocks will be needed for this purpose.

Then, according to the invention, the same light energy should be emitted during the two packets of light. It is not always possible, for example for the video levels greater than 232 in the present example. Furthermore, for the lowest video levels, the sub-fields of only one sub-field group are preferably used in order to reduce the dithering noise. The low video levels will have only one packet of light but it is not so important since these levels do not generate any flicker.

For example, if i designates an input video level, a the value of the part of code word assigned to the first packet of light, and b the value of the part of code word assigned to the second packet of light, the values a and b can be determined as follows:
For 0≤i≤1, a=i and b=0.
For 1≤i≤2, a=1 and b=i-1.
For 2≤i≤232, a=i/2 and b=i/2. (232=2×116)
For 232≤i≤ 255, a = i -116 and b =116 .

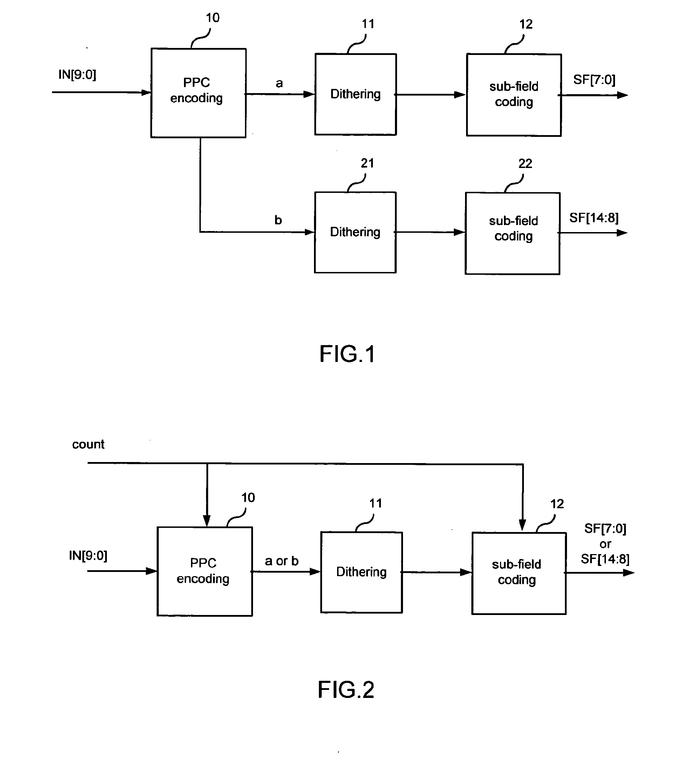

In figure 1, a block diagram of a possible circuit implementation for encoding the video levels into sub-field code word as described above is illustrated. Input R,G,B video data, IN[9:0], coming for example from a video degamma unit, are forwarded to splitting means 10 used for outputting, for each input video data, the values a and b. These means comprise for example two Look-Up Tables (LUTs), one for delivering the value a and one for delivering the value b. The value a (respectively b) is then advantageously transmitted to a dithering block 11 (resp. 21) for generating, if need be, values encodable by the subfield group G1 (resp. G2). The dithered value is then forwarded to a subfield coding block 12 (resp.22) for outputting the corresponding subfield code word. This sub-field code word will be used by the display panel for driving the lighting period of the cells of the panel.

It is also possible to use the Parallel Peak Code with a frame frequency twice as high. For example, instead of having a 50Hz video input, it is also possible to have a 100Hz video input and to use, depending on the parity of the frame (odd or even), the first or the second group of sub-fields (G1 or G2) and the corresponding encoding table. Of course, it is not limited to 100Hz; it can also be used for other frequencies like 72, 75, 80, 85, 90 or even 120 Hz. Figure 2 is illustrated this possibility. Count is a 1-bit counter, which is incremented at each frame. Depending on its value (0 or 1), the video is encoded with sub-field group G1 and the encoding table assigned to this first group (case 0) or with sub-field group G2 and the encoding table assigned to this second group (case 1).

## Claims

1. Method for processing video pictures consisting of pixels, the pixels being digitally coded, the digital code word determining the length of the time period during which the corresponding pixel of a display is activated, wherein to each bit of a digital code word a certain activation duration is assigned, hereinafter called sub-field (SF), the sum of the duration of the sub-fields (SF) according to a given code word determining the length of the time period during which the corresponding pixel is activated, the sub-fields (SF) of a pixel being organised in two consecutive groups (G1, G2) such that to a value of a pixel a code word is assigned which distributes the active sub-field periods equally over the two sub-field groups (G1, G2),
**characterized in that** the two groups (G1, G2) comprise sub-fields of different activation durations and **in that**, for all pixel values apart from exceptions in the low pixel value range up to a first predetermined limit and/or in the high pixel value range from a second limit on, the pixel value is split into first and second equal values (a, b), said first and second values (a,b) being encoded into first and second code words, said first code word being the part of the code word assigned to one of the two sub-field groups and said second code word being the part of the code word assigned to the other sub-field group.

2. Method according to Claim 1, **characterized in that** a dithering step is applied to said first and second values (a,b) before being encoded into first and second code words.

3. Method according to claim 1 or 2, **characterized in that**, for a video pictures sequence with an increased frequency, the pixel values of the even pictures of the sequence are encoded into code words using one of the two sub-field groups and the pixel values of the odd pictures of the sequence are encoded into code words using the other sub-field group.

4. Apparatus for processing video pictures consisting of pixels, the pixels being digitally coded, the digital code word determining the length of the time period during which the corresponding pixel of a display is activated, wherein to each bit of a digital code word a certain activation duration is assigned, hereinafter called sub-field (SF), the sum of the duration of the sub-fields (SF) according to a given code word determining the length of the time period during which the corresponding pixel is activated, the sub-fields (SF) of a pixel being organised in two consecutive groups (G1, G2) such that to a value of a pixel. a code word is assigned which distributes the active sub-field periods equally over the two sub-field groups (G1, G2),
**characterized in that** sub-fields of different activation durations are used in the sub-field groups (G1, G2) and **in that** encoding means (10, 12, 22) are provided for splitting, for all pixel values apart from exceptions in the low pixel value range up to a first predetermined limit and/or the in the high pixel value range from a second limit on, each of said pixel values into first and second equal values (a, b) and encoding said first and second values (a,b) into first and second code words, said first code word being the part of the code word assigned to one of the two sub-field groups and said second code word being the part of the code word assigned to the other sub-field group.

5. Apparatus according to claim 4, **characterized in that** it further comprises dithering means (11, 21) for processing said first and second values (a,b).

6. Apparatus according to claim 4 or 5, **characterized in that**, for a video pictures sequence with an increased frequency, the encoding means (10, 12, 22) encode the pixel values of the even pictures of the sequence into code words using one of the two sub-field groups and the pixel values of the odd pictures of the sequence into code words using the other sub-field group.
